# EUROPEAN PATENT SPECIFICATION

(11) **EP 3 054 653 B1**
(45) Date of publication and mention of the grant of the patent: **14.11.2018**
(21) Application number: 16157385.2
(22) Date of filing: 05.09.2006
(51) Int. Cl.: H04L 29/08, H04M 1/725

(54) **SMART ARTEFACT AND USER TERMINAL HAVING A SHORT RANGE INTERFACE AND LONG RANGE INTERFACE**
INTELLIGENTES ARTEFAKT UND BENUTZERENDGERÄT MIT EINER KURZBEREICHSSCHNITTSTELLE UND WEITBEREICHSSCHNITTSTELLE
ARTEFACT INTELLIGENT ET TERMINAL UTILISATEUR COMPRENANT UNE INTERFACE COURTE PORTÉE ET UNE INTERFACE À LONGUE PORTÉE

(43) Date of publication of application: 10.08.2016
(62) Divisional of application: 06291415.5
(73) Proprietor: Alcatel Lucent, 91620 Nozay (FR)
(72) Inventor: TRAPPENIERS, Lieven, 2018 Antwerpen (BE); GODON, Marc, 2018 Antwerpen (BE)
(74) Representative: Nokia EPO representatives

(56) References cited:
- EP-A- 1 622 346
- WO-A-2004/003801
- US-A1- 2003 088 496
- US-A1- 2004 203 352
- US-A1- 2006 071 778
- KAMIOKA E ET AL: "A User-Driven Device Handover System in PAN Environments", MOBILE DATA MANAGEMENT, 2006. MDM 2006. 7TH INTERNATIONAL CONFERENCE O N NARA, JAPAN 10-12 MAY 2006, PISCATAWAY, NJ, USA,IEEE, 10 May 2006 (2006-05-10), pages 56-56, XP010917930, DOI: 10.1109/MDM.2006.24 ISBN: 978-0-7695-2526-6
- PENTTILA K ET AL: "Use and interface definition of mobile RFID reader integrated in a smart phone", CONSUMER ELECTRONICS, 2005. (ISCE 2005). PROCEEDINGS OF THE NINTH INTERNATIONAL SYMPOSIUM ON MACAU SAR 14-16 JUNE 2005, PISCATAWAY, NJ, USA,IEEE, 14 June 2005 (2005-06-14), pages 353-358, XP010832175, ISBN: 0-7803-8920-4

## Description

### Field of the Invention

The present invention generally relates to interactive sessions between smart artefacts, e.g. public displays, whiteboards or billboards, and user terminals such as mobile phones, PDAs, laptops, etc. Such interactive sessions enable downloading content to the user terminal, like a word, event date, a number, photo, drawing, ring tone, game, a video, an URL, etc., or enable controlling the information that is made accessible or visible through the smart artefact.

### Background of the Invention

One way to categorize prior art interactive artefacts and user terminals is to distinguish between solutions with plural zones of interaction and solutions with a single zone of interaction.

GossipWall and ViewPort, described in the article "Situated Interaction with Ambient Information: Facilitating Awareness and Communication in Ubiquitous Work Environments" from the authors Norbert Streitz, Carsten Rocker, Thorsten Prante, Richard Stenzel and Daniel van Alphen, for instance describes an artefact with sensing technology, i.e. the GossipWall display, and a user terminal with sensing technology, i.e. the ViewPort device, which interact in three zones depending on the distance of the ViewPort from the GossipWall: the Interactive zone, the Notification zone, and the Ambient zone. The GossipWall thereto includes two independent RFID sensors that sense presence of a ViewPort device respectively within the Interactive zone and the Notification zone. When a ViewPort device is sensed within the Interactive zone, interaction becomes possible with each independent pixel or cell of the GossipWall display. When a ViewPort device is sensed within the Notification zone, the GossipWall can "borrow" the ViewPort device and use it to provide personal information to the user, e.g. information relating to the patterns displayed on the GossipWall. When a ViewPort device passes outside the Interactive or Notification zones, i.e. in the Ambient zone where it is not sensed, the GossipWall display shall show general information and no interaction is possible. A more detailed explanation of GossipWall and ViewPort can be found in the above cited article which is downloadable from the Internet via the following URL:
http://www.ipsi.fraunhofer.de/ambiente/paper/2003/HCII-2003-Streitz.et.al.-final.pdf

A similar system is Hello.Wall, another wall-sized ambient display that interacts with user terminals such as the ViewPort depending on the distance from the individual holding the user terminal to the wall. Hello.Wall is described in a publication entitled "Ambient Agoras - InfoRiver, SIAM, Hello.Wall" from Thorsten Prante et. al., downloadable via URL:
http://www.ipsi.fraunhofer.de/ambiente/paper/2004/AmbientAgoras-CHI04-prante.pdf
and in a second Internet publication entitled "Ambient Agoras" that is accessible through URL:
http://www.ipsi.fraunhofer.de/ambiente/material/pictu res/

A drawback of the above described solutions based on plural interaction zones, is that an interactive session between the smart artefact and the user terminal cannot be conveyed from one zone to another. Upon entrance of a new zone, the interaction mode between the user terminal and artefact will change automatically.

Another disadvantage of the known prior art systems is that there is no explicit selection by the user of the artefact to interact with. As soon as the user terminal is within a certain proximity of the artefact, interaction is established automatically. Even if the ViewPort user is only passing by and doesn't wish to interact with the smart display, the GossipWall will detect presence of the ViewPort device and automatically select it for interaction, resulting for instance in general information being replaced with personal information on the display.

The lack of explicit selection becomes even more disturbing in a scenario where many smart artefacts are around. Depending on the respective distances to the user terminal, all these artefacts may start interacting with the user terminal, whereas the user only prefers to select a specific one.

An example prior art system with only one interaction zone is Polyvision's Walk-and-Talk Lightning interactive whiteboard that is accompanied by a user terminal, i.e. the Walk-and-Talk board that serves as intuitive remote control and allows projecting, writing, erasing, saving, and printing the whiteboard presentation, as well as accessing the web. The Walk-and-Talk Lightning interactive whiteboard is advertised at the following URL:
http://www.polyvision.com/media/product_sheets/Walk-and-Talk-Lightning-Product-Sheet.pdf

Another single zone interactive artefact may be realized through the Hypertag, which is a small electronic tag that is attached to an advert or public sign enabling infra-red or Bluetooth based mobile phones and PDAs to interact with the tagged poster panel, billboard, etc. and download a phone number, reminder prompt, a game, a logo, a picture, a ring-tone, etc. The Hypertag platform is advertised at:
http://www.hypertag.com/

Although the selection may be more explicit, e.g. a Bluetooth connection may have to be established and authenticated between the user terminal and the public artefact, the single zone solutions enabling interaction between a smart artefact and a user terminal still suffer from the drawback that an interactive session between terminal and artefact cannot be ported outside the short range zone wherein the session is initiated, e.g. through Bluetooth or line of sight connectivity such as infra-red interfaces.

Document XP010917930 discloses the handover of an "interactive session" between a first and a second device, from the second device towards a third device instead of switching an interactive session from a first communications interface towards a second communication interface of the respective and same devices.

It is an object of the invention to provide a smart artefact and user terminal that overcomes the above listed shortcomings of prior art solutions. In particular, it is an objective to disclose a smart artefact and user terminal that are able to extend an interactive session beyond predefined zones. Further, it is an objective to enable explicit selection of the smart artefact(s) with whom a user terminal enters into an interactive session, in particular in the vicinity of plural smart artefacts.

### Summary of the Invention

The invention is defined by the independent claims. Further embodiments are defined by the dependent claims.

### Brief Description of the Drawings

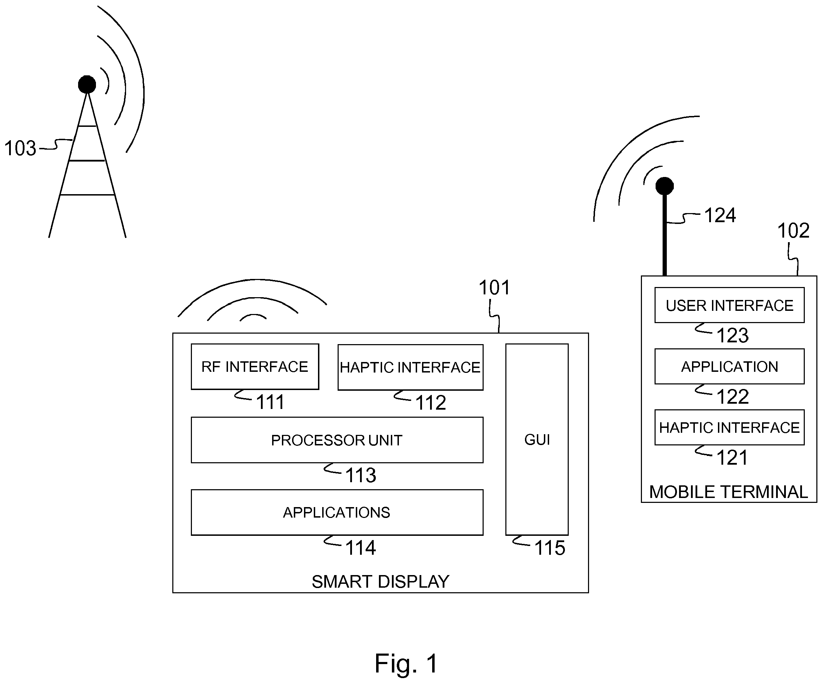

Fig. 1 illustrates an embodiment of the artefact and user terminal according to the present invention.

### Detailed Description of Embodiment(s)

Fig. 1 shows a smart public display 101, a mobile user terminal 102, and a base transceiver station 103 of a mobile network.

The smart display 101 contains an RF interface 111, a haptic interface 112, a processor unit 113, application logic 114 and a graphical user interface 115. The mobile user terminal 102 has a haptic interface 121, application logic 122, a user interface 123 and an RF interface 124. The RF interfaces in the smart display 111 and user terminal 124 can be an interface for GSM, GPRS, UMTS, Bluetooth, WiFi, etc.

When the user of the mobile terminal 102 touches with the haptic interface 121 the corresponding haptic interface 112 of the smart display 101, a short range interactive session is established between the smart display 101 and user terminal 102 and the mobile user terminal 102 becomes associated to the smart display 101.

Once the association is made between the mobile terminal 102 and the smart display 101, the user of the mobile terminal 102 may start walking around. The interactive session with the smart display 101 will be kept, even when the user is out of sight, since the session will be handed over from the haptic interface 112 to the RF interface 111, which is a long range interface that communicates with the RF interface 124 of the mobile terminal 102 via the mobile network represented by the base transceiver station 103 in Fig. 1. Also in the mobile user terminal 102, the interactive session is transferred from the haptic interface 121 to the RF interface 124, and this in synchronism with the handover in the smart display 101. From this moment on, the smart display 101 and the user terminal 102 are engaged in a long range communication session, and the interaction takes place over RF. An application, e.g. of the client-server type like fetching a movie trailer, posting text, sharing the graphical user interface between the user terminal and the smart display, etc. will run over the established interactive communication session, and the user is able to maintain the interactive session, for instance even till he has returned to his/her home or his/her office.

Thanks to the invention, the user of the mobile terminal 102 is offered a clear and intuitive way of entering into an interactive session with the smart display 101. The user can select a smart display from a multiple of displays within his vicinity by simply touching the selected display with the mobile terminal 102, and is able to extend the interaction zone to infinity (e.g. take the interactive session with the smart display home). The invention introduces natural, tactile or haptic aspects in the interaction with smart artefacts, and solves the privacy issue when interacting with public artefacts, like public displays or billboards that according to prior art solutions would automatically interact with the passing user terminal and eventually display personal, private information.

Although the user terminal 102 and the smart display 101 in Fig. 1 are equipped with a haptic or touch-based interface, any short range interface or sensing technology like RFID, infrared, Bluetooth, barcode reading, etc. could be a viable alternative for associating a user terminal with the smart display and establishing an interactive session there between.

A further remark is that the smart display 101 and the mobile phone 102 of Fig. 1 are only examples of the smart artefact and the user terminal according to the present invention. Other examples of smart artefacts are billboards, whiteboards, ambient walls, tables etc. Other examples of user terminals are PDA (Personal Digital Assistants), laptops, remote control devices, etc.

Yet another remark is that long range communication via an RF connection through a base transceiver station was only given as example. The skilled technician will appreciate that variants of the present invention may employ long range communication through hotspots (e.g. WiFi), or through other wireless terminals (e.g. WiFi in ad-hoc mode) in the neighbourhood.

It is also noticed that the smart display, or more generally the smart artefact, and user terminal according to the present invention may comprise more than one short range interface, and more than one long range interface. Plural interfaces increase the chance for compatibility, and the chance to successfully establish an interactive session when for instance one of the interfaces fails. In such case where the user terminal or smart artefact contains plural short range interfaces and/or plural long range interfaces, the terminal or artefact preferably is also equipped with handover means that enable to transfer an interactive communication session from any available short range interface to any available long range interface. When plural long range interfaces are available, the user terminal and smart artefact possibly agree upon the long range communication means that will be used to maintain the interactive session. This may be done during a negotiation cycle.

A smart artefact (101) having first interfacing means (112), active within a short range, for initiating an interactive session with a user terminal (102),
CHARACTERIZED IN THAT said smart artefact (101) further has:
second interfacing means (111), active within a substantially longer range than said short range, for continuing said interactive session with said user terminal (102), and
means for transferring said interactive session from said first interfacing means (112) towards said second interfacing means (111).

A further embodiment of the smart artefact (101) is CHARACTERIZED IN THAT said first interfacing means (112) are an instantiation of one or more of:
a touch-based interface;
a Radio Frequency Identification (RFID) tag;
a Radio Frequency Identification (RFID) tag reader;
a barcode;
a barcode scanner;
a shotcode;
a shotcode scanner;
a Uniform Resource Locator (URL);
a Uniform Resource Locator (URL) reader;
a Near Field Communication (NFC) interface;
an infrared interface;
a Bluetooth interface.

Another embodiment of the smart artefact (101) is CHARACTERIZED IN THAT said second interfacing means (111) are an instantiation of one or more of:
a Bluetooth interface or IEEE 802.15 interface;
a Wireless Local Area Network (WLAN) interface;
a Wireless Fidelity (WiFi) interface or IEEE 802.11 interface;
a Worldwide Interoperability for Microwave Access (WiMAX) interface or IEEE 802.16 interface;
a Wireless Broadband (WiBro) interface;
a HomeRF interface;
a Global System for Mobile communications (GSM) interface;
a Wireless Application Protocol (WAP) interface;
a Universal Mobile Telephone System (UMTS) interface.

A user terminal (102) having first interfacing means (121), active within a short range, for initiating an interactive session with a smart artefact (101),
CHARACTERIZED IN THAT said user terminal (102) further has
second interfacing means (124), active within a substantially longer range than said short range, for continuing said interactive session with said smart artefact (101), and
means for transferring said interactive session from said first interfacing means (121) towards said second interfacing means (124).

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A user terminal (102) having first interface means (121), active within a short range, for entering into an interactive session with a smart display device (101),
**characterised in that** said user terminal (102) further has;
selection means for selecting a smart display device (101),
second interface means (124), active within a longer range than said short range, for continuing said interactive session with said selected a smart display device (101).

2. A user terminal (102) according to claim 1 wherein said interactive session over said first interface means (121) is established when the user terminal (102) and the smart display device (101) are within proximity of each other.

3. A user terminal (102) according to any preceding claim wherein the user terminal (102) initiates the interactive session.

4. A user terminal (102) according to any preceding claim wherein the selection of one smart display device (101) is made from a plurality of smart display devices by the user.

5. A user terminal (102) according to any preceding claim wherein the selection means is made by touching the smart display device (101).

6. A user terminal (101) according to any preceding claim, wherein the selection means is provided by the first interface means (121).

7. A user terminal (101) according to any preceding claim wherein the first interface means (121) is one or more of:
a touch-based interface;
a Radio Frequency Identification (RFID) tag;
a Radio Frequency Identification (RFID) tag reader;
a barcode;
a barcode scanner;
a shortcode;
a Uniform Resource Locator (URL);
a Uniform Resource Locator (URL) reader;
a Near Field Communication (NFC) interface;
an infrared interface;
a Bluetooth interface.

8. A user terminal (101) according to any preceding claim wherein the second interface means (124) is one or more of:
a Bluetooth interface or IEEE 802.15 interface;
a Wireless Local Area Network (WLAN) interface;
a Wireless Fidelity (WiFi) interface or IEEE 802.11 interface;
a Worldwide Interoperability for Microwave Access (WiMAX) interface or IEEE 802.16 interface;
a Wireless Broadband (WiBro) interface;
a HomeRF interface;
a Global System for Mobile communications (GSM) interface;
a Wireless Application Protocol (WAP) interface;
a Universal Mobile Telephone System (UMTS) interface.

9. A smart display device (101) having first interface means (112), active within a short range, for entering into an interactive session with a user terminal (102), **characterised in that** said smart display device (101) further has;
second interface means (111), active within a longer range than said short range, for continuing said interactive session with said user terminal (102).

10. A smart display device (101) according to claim 9 wherein said interactive session over said first interface means (111) is established when the user terminal (102) and the smart display device (101) are within proximity of each other.

11. A smart display device (101) according to claims 9 to 10 wherein the smart display device (101) initiates the interactive session.

12. A smart display device (101) according to claims 9 to 11 wherein the selection of said smart display device (101) is made by the smart display device (101) having been touched.

13. A smart display device (101) according to claims 9 to 12
wherein the first interface means (112) is any one or more of:
a touch-based interface;
a Radio Frequency Identification (RFID) tag;
a Radio Frequency Identification (RFID) tag reader;
a barcode;
a barcode scanner;
a shortcode;
a Uniform Resource Locator (URL);
a Uniform Resource Locator (URL) reader;
a Near Field Communication (NFC) interface;
an infrared interface;
a Bluetooth interface.

14. A smart display device (101) according to claims 9 to 13
wherein the second interface means (111) is any one of:
a Bluetooth interface or IEEE 802.15 interface;
a Wireless Local Area Network (WLAN) interface;
a Wireless Fidelity (WiFi) interface or IEEE 802.11 interface;
a Worldwide Interoperability for Microwave Access (WiMAX) interface or IEEE
802.16 interface;
a Wireless Broadband (WiBro) interface;
a HomeRF interface;
a Global System for Mobile communications (GSM) interface;
a Wireless Application Protocol (WAP) interface;
a Universal Mobile Telephone System (UMTS) interface.

## Patentansprüche

1. Benutzerendgerät (102), das erste Schnittstellenmittel (121) aufweist, aktiv innerhalb eines kurzen Bereichs, zum Eingehen in eine interaktive Sitzung mit einem Smart Display Gerät (101),
**dadurch gekennzeichnet, dass** besagtes Benutzerendgerät (102) weiterhin aufweist:
Auswahlmittel zum Auswählen eines Smart Display Geräts (101),
zweite Schnittstellenmittel (124), die aktiv sind innerhalb eines größeren Bereichs als besagter kurze Bereich, zum Fortfahren mit besagter interaktiven Sitzung innerhalb besagten ausgewählten Smart Display Geräts (101).

2. Benutzerendgerät (102) nach Anspruch 1, wobei besagte interaktive Sitzung über besagte erste Schnittstellenmittel (121) aufgebaut wird, wenn das Benutzerendgerät (102) und das Smart Display Gerät (101) sich in Nähe voneinander befinden.

3. Benutzerendgerät (102) nach einem beliebigen der vorhergehenden Ansprüche, wobei das Benutzerendgerät (102) die interaktive Sitzung initiiert.

4. Benutzerendgerät (102) nach einem beliebigen der vorhergehenden Ansprüche, wobei die Auswahl eines Smart Display Geräts (101) durchgeführt wird von einer Vielzahl von Smart Display Geräten durch den Benutzer.

5. Benutzerendgerät (102) nach einem beliebigen der vorhergehenden Ansprüche, wobei die Auswahlmittel benutzt wird durch Berühren des Smart Display Geräts (101).

6. Benutzerendgerät (101) nach einem beliebigen der vorhergehenden Ansprüche, wobei das Auswahlmittel bereitgestellt wird durch die ersten Schnittstellenmittel (121).

7. Benutzerendgerät (101) nach einem beliebigen der vorhergehenden Ansprüche, wobei die ersten Schnittstellenmittel (121) eins oder mehr sind aus:
Touch-basierte Schnittstelle;
RFID-Tag (Radio Frequency Identification);
RFID-Tag-Reader (Radio Frequency Identification);
Balkenkode; Balkenkodescanner; Shortcode;
URL (Uniform Resource Locator);
URL-Reader (Uniform Resource Locator);
NFC-Schnittstelle (Near Field Communication);
Infrarot-Schnittstelle;
Bluetooth-Schnittstelle.

8. Benutzerendgerät (101) nach einem beliebigen der vorhergehenden Ansprüche, wobei die zweiten Schnittstellenmittel (124) eins oder mehr sind aus:
Bluetooth-Schnittstelle oder IEEE 802.15 Schnittstelle;
WLAN-Schnittstelle (Wireless Local Area Network);
WiFi-Schnittstelle (Wireless Fidelity) oder IEEE 802.11 Schnittstelle;
WiMAX-Schnittstelle (Worldwide Interoperability for Microwave Access) oder IEEE 802.16 Schnittstelle;
WiBro-Schnittstelle (Wireless Broadband;
HomeRF-Schnittstelle;
GSM-Kommunikationsschnittstelle (Global System for Mobile);
WAP-Schnittstelle (Wireless Application Protocol);
UMTS-Schnittstelle (Universal Mobile Telephone System).

9. Smart Display Gerät (101), das erste Schnittstellenmittel (112) aufweist, aktiv innerhalb eines kurzen Bereichs, zum Eingehen in eine interaktive Sitzung mit einem Benutzerendgerät (102), **dadurch gekennzeichnet, dass** besagtes Smart Display Gerät (101) weiterhin aufweist:
zweite Schnittstellenmittel (111), die aktiv sind innerhalb eines größeren Bereichs als besagter kurze Bereich, zum Fortfahren mit besagter interaktiven Sitzung mit besagtem Benutzerendgerät (102).

10. Smart Display Gerät (102) nach Anspruch 9, wobei besagte interaktive Sitzung über besagte erste Schnittstellenmittel (111) aufgebaut wird, wenn das Benutzerendgerät (102) und das Smart Display Gerät (101) sich in Nähe voneinander befinden.

11. Smart Display Gerät (101) nach den Ansprüchen 9 bis 10, wobei das Smart Display Gerät (101) die interaktive Sitzung initiiert.

12. Smart Display Gerät (101) nach den Ansprüchen 9 bis 11, wobei die Auswahl besagten Smart Display Geräts (101) durchgeführt wird von dem Smart Display Gerät (101), das berührt worden ist.

13. Smart Display Gerät (101) nach den Ansprüchen 9 bis 12, wobei die ersten Schnittstellenmittel (112) eins oder mehr sind aus:
Touch-basierte Schnittstelle;
RFID-Tag (Radio Frequency Identification);
RFID-Tag-Reader (Radio Frequency Identification);
Balkenkode; Balkenkodescanner;
Shortcode;
URL (Uniform Resource Locator); URL-Reader (Uniform Resource Locator);
NFC-Schnittstelle (Near Field Communication);
Infrarot-Schnittstelle;
Bluetooth-Schnittstelle.

14. Smart Display Gerät (101) nach den Ansprüchen 9 bis 13, wobei die zweiten Schnittstellenmittel (111) eins sind aus:
Bluetooth-Schnittstelle oder IEEE 802.15 Schnittstelle;
WLAN-Schnittstelle (Wireless Local Area Network);
WiFi-Schnittstelle (WiFi) oder IEEE 802.11 Schnittstelle;
WiMAX-Schnittstelle (Worldwide Interoperability for Microwave Access) oder IEEE 802.16 Schnittstelle;
WiBro-Schnittstelle (Wireless Broadband);
HomeRF-Schnittstelle;
GSM-Kommunikationsschnittstelle (Global System for Mobile);
WAP-Schnittstelle (Wireless Application Protocol);
UMTS-Schnittstelle (Universal Mobile Telephone System).

## Revendications

1. Terminal utilisateur (102) ayant un premier moyen d'interface (121), actif dans une courte portée, pour lancer une session interactive avec un dispositif d'affichage intelligent (101),
**caractérisé en ce que** ledit terminal utilisateur (102) a en outre ;
un moyen de sélection pour sélectionner un dispositif d'affichage intelligent (101),
un second moyen d'interface (124), actif dans une portée plus longue que ladite courte portée, pour poursuivre ladite session interactive avec ledit dispositif d'affichage intelligent (101) sélectionné.

2. Terminal utilisateur (102) selon la revendication 1 dans lequel ladite session interactive sur ledit premier moyen d'interface (121) est établie lorsque le terminal utilisateur (102) et le dispositif d'affichage intelligent (101) sont à proximité l'un de l'autre.

3. Terminal utilisateur (102) selon l'une quelconque des revendications précédentes, le terminal utilisateur (102) initiant la session interactive.

4. Terminal utilisateur (102) selon l'une quelconque des revendications précédentes, dans lequel la sélection d'un dispositif d'affichage intelligent (101) est réalisée à partir d'une pluralité de dispositifs d'affichage intelligents par l'utilisateur.

5. Terminal utilisateur (102) selon l'une quelconque des revendications précédentes dans lequel le moyen de sélection est réalisé en touchant le dispositif d'affichage intelligent (101).

6. Terminal utilisateur (101) selon l'une quelconque des revendications précédentes, dans lequel le moyen de sélection est fourni par le premier moyen d'interface (121).

7. Terminal utilisateur (101) selon l'une quelconque des revendications précédentes, dans lequel le premier moyen d'interface (121) est un ou plusieurs des éléments suivants :
une interface tactile ;
une étiquette d'identification par radiofréquence (RFID) ;
un lecteur d'étiquette d'identification par radiofréquence (RFID) ;
un code-barres ;
un lecteur de code-barres ;
un numéro abrégé ;
un localisateur uniforme de ressources (URL) ;
un lecteur de localisateur uniforme de ressources (URL) ;
une interface de communication en champ proche (NFC) ;
une interface infrarouge ;
une interface Bluetooth.

8. Terminal utilisateur (101) selon l'une quelconque des revendications précédentes, dans lequel le second moyen d'interface (124) est un ou plusieurs des éléments suivants :
une interface Bluetooth ou une interface IEEE 802.15 ;
une interface de réseau local sans fil (WLAN) ;
une interface WiFi ou une interface IEEE 802.11 ;
une interface d'interopérabilité mondiale des accès d'hyperfréquences (WiMAX) ou une interface IEEE 802.16 ;
une interface sans fil à large bande (WiBro) ;
une interface HomeRF ;
une interface de système mondial de communication avec les mobiles (GSM) ;
une interface de protocole d'application sans fil (WAP) ;
une interface de système universel de télécommunications mobiles (UMTS).

9. Dispositif d'affichage intelligent (101) ayant un premier moyen d'interface (112), actif dans une courte portée, pour lancer une session interactive avec un terminal utilisateur (102), **caractérisé en ce que** ledit dispositif d'affichage intelligent (101) présente en outre ;
un second moyen d'interface (111), actif dans une portée plus longue que ladite courte portée, pour poursuivre ladite session interactive avec ledit terminal utilisateur (102).

10. Dispositif d'affichage intelligent (101) selon la revendication 9 dans lequel ladite session interactive sur ledit premier moyen d'interface (111) est établie lorsque le terminal utilisateur (102) et le dispositif d'affichage intelligent (101) sont à proximité l'un de l'autre.

11. Dispositif d'affichage intelligent (101) selon les revendications 9 et 10 dans lequel le dispositif d'affichage intelligent (101) initie la session interactive.

12. Dispositif d'affichage intelligent (101) selon les revendications 9 à 11 dans lequel la sélection dudit dispositif d'affichage intelligent (101) est réalisée par le dispositif d'affichage intelligent (101) ayant été touché.

13. Dispositif d'affichage intelligent (101) selon les revendications 9 à 12 dans lequel le premier moyen d'interface (112) est un ou plusieurs des éléments suivants :
une interface tactile ;
une étiquette d'identification par radiofréquence (RFID) ;
un lecteur d'étiquette d'identification par radiofréquence (RFID) ;
un code-barres ;
un lecteur de code-barres ;
un numéro abrégé ;
un localisateur uniforme de ressources (URL) ;
un lecteur de localisateur uniforme de ressources (URL) ;
une interface de communication en champ proche (NFC) ;
une interface infrarouge ;
une interface Bluetooth.

14. Dispositif d'affichage intelligent (101) selon les revendications 9 à 13 dans lequel le second moyen d'interface (111) est un quelconque des éléments suivants :
une interface Bluetooth ou une interface IEEE 802.15 ;
une interface de réseau local sans fil (WLAN) ;
une interface WiFi ou une interface IEEE 802.11 ;
une interface d'interopérabilité mondiale des accès d'hyperfréquences (WiMAX) ou une interface IEEE 802.16 ;
une interface sans fil à large bande (WiBro) ;
une interface HomeRF ;
une interface de système mondial de communication avec les mobiles (GSM) ;
une interface de protocole d'application sans fil (WAP) ;
une interface de système universel de télécommunications mobiles (UMTS).
